# EUROPÄISCHE PATENTANMELDUNG

(11) **EP 3 015 727 A1**
(43) Veröffentlichungstag der Anmeldung: **04.05.2016**
(21) Anmeldenummer: 15189950.7
(22) Anmeldetag: 15.10.2015
(51) Int. Cl.: F16C 33/50, F16C 33/46, F16C 9/02, F16C 9/04, F16C 19/36, F16C 19/46

(54) **KURBELWELLEN- ODER PLEUELLAGERUNG EINER VERBRENNUNGSKRAFTMASCHINE ODER EINES KOMPRESSORS**

(30) Priorität: 29.10.2014 DE 102014222096
(71) Anmelder: Aktiebolaget SKF, 41 550 Göteborg (SE)
(72) Erfinder: Steblau, Dieter, 97422 Schweinfurt (DE)
(74) Vertreter: Kuhstrebe, Jochen

(57) **Zusammenfassung**

Die Erfindung betrifft eine Kurbelwellen- oder Pleuellagerung einer Verbrennungskraftmaschine oder eines Kompressors, die zur Lagerung zweier relativ zueinander beweglicher Bauteile eine Reihe Wälzkörper umfasst, die von einem Käfig (1) gehalten werden, wobei der Käfig eine Anzahl Aufnahmetaschen (2) für die Wälzkörper aufweist. Um eine einfache Montierbarkeit zu erreichen, sieht die Erfindung vor, dass der Käfig aus mindestens zwei Käfigsegmenten (1', 1") besteht, die sich jeweils um einen Umfangsabschnitt des Käfigs erstrecken, wobei die mindestens zwei Käfigsegmente an ihren in Umfangsrichtung liegenden Stoßstellen (3, 4) miteinander formschlüssig verbunden sind.

## Beschreibung

Die Erfindung betrifft eine Kurbelwellen- oder Pleuellagerung einer Verbrennungskraftmaschine oder eines Kompressors, die zur Lagerung zweier relativ zueinander beweglicher Bauteile eine Reihe Wälzkörper umfasst, die von einem Käfig gehalten werden, wobei der Käfig eine Anzahl Aufnahmetaschen für die Wälzkörper aufweist.

Typischer Weise werden die Lagerzapfen einer Kurbelwelle sowie die Pleuel auf der Kurbelwelle bei einer Verbrennungskraftmaschine oder bei einem Kompressor mittels Gleitlager gelagert; allerdings werden auch Wälzlagerungen an dieser Lagerstelle eingesetzt. Zur Führung der Wälzkörper wird in diesem Falle ein Käfig benötigt.

Bei Einzylinder-Motoren bzw. -Kompressoren ist dabei betreffend den Käfig zumeist keine geteilte Lösung erforderlich. Die Lagerung kann hier mit Nadelkränzen ausgestattet werden. Für die Fälle, in denen die radiale Montage nicht möglich ist, kann eine Lösung mit einer geteilter Lagerung ins Auge gefasst werden.

Bei Zwei- und Mehrzylinder-Motoren bzw. -Kompressoren wird zumeist eine Gleitlagerung vorgesehen. Bekannt sind insbesondere für spezielle Anwendungen (vor allem für den Rennsport) auch geteilte Käfige, die dann an der Lagerstelle gefügt werden. Nachteilig ist in diesem Falle der hohe Schwierigkeitsgrad der Montage. Ferner ist es hier schwieriger als im Falle von einteiligen Käfigen, eine geringe Geräuschentwicklung sicherzustellen sowie die Wälzkörperbewegung zu kontrollieren. Ferner ist auch eine Schwächung des Käfigs die Folge, wenn ein Standardnadelkranz geteilt wird.

Der Erfindung liegt die **Aufgabe** zugrunde, eine gattungsgemäße Kurbelwellen- bzw. Pleuellagerung einer Verbrennungskraftmaschine oder eines Kompressors so fortzubilden, dass eine einfache Montagemöglichkeit besteht, wobei auch eine möglichst hohe Stabilität des Käfigs angestrebt wird, um die Wälzkörper möglichst genau führen zu können.

Die Lösung dieser Aufgabe durch die Erfindung ist dadurch gekennzeichnet, dass der Käfig aus mindestens zwei Käfigsegmenten besteht, die sich jeweils um einen Umfangsabschnitt des Käfigs erstrecken, wobei die mindestens zwei Käfigsegmente an ihren in Umfangsrichtung liegenden Stoßstellen miteinander formschlüssig verbunden sind.

Der Käfig wird dabei bevorzugt durch genau zwei Käfigsegmente gebildet.

Die formschlüssige Verbindung ist bevorzugt nach Art einer Clipverbindung ausgebildet. Die formschlüssige Verbindung wird bevorzugt an jeder Stoßstelle durch mindestens einen hakenförmigen Vorsprung im einen Käfigsegmente gebildet, der in eine kongruente Ausnehmung im anderen Käfigsegment eingreift. An jedem Käfigsegment können in Umfangsrichtung folgend jeweils mindestens ein hakenförmiger Vorsprung und mindestens eine kongruente Ausnehmung vorgesehen sein.

In den Endbereichen eines jeden Käfigsegments können je zwei hakenförmige Vorsprünge vorgesehen sein, die radial gegensinnig angeordnet sind, wobei der eine hakenförmige Vorsprung in einem ersten axialen Bereich angeordnet ist und wobei der andere hakenförmige Vorsprung in einem zweiten axialen Bereich angeordnet ist, der an den ersten axialen Bereich angrenzt. Die beiden axialen Bereiche dehnen sich dabei bevorzugt jeweils über die Hälfte der axialen Erstreckung des Käfigsegments aus.

Die formschlüssigen Verbindungen an den Stoßstellen ergeben im montierten Zustand der Käfigsegmente vorzugsweise eine ungestörte hohlzylindrische Form.

Alle Käfigsegmente sind bevorzugt formgleich ausgebildet. Dabei ist es von besonderem Vorteil, wenn die Käfigsegmente durch einen Spritzgießvorgang hergestellt sind.

Die im Käfig platzierten Wälzkörper sind bevorzugt Zylinderrollen oder Nadeln.

Mit der vorgeschlagenen Ausgestaltung wird die Montage eines Rollen- bzw. Nadelkranzes insbesondere einer Pleuellagerung am Kolbenbolzen oder an der Kurbelwelle wesentlich erleichtert. Bei der vorgeschlagenen Lösung werden die Käfigsegmente mittels eines Verschlussmechanismus in einfacher Weise montierbar, wobei die Käfigsegmente miteinander verrasten und so einen relativ stabilen Verbund bilden. Entsprechend ist auch die Demontage in einfacher Weise möglich.

Sehr vorteilhaft ist, dass bei der Ausgestaltung als Spritzgießformteil nur ein Spritzwerkzeug für ein Käfigsegment bzw. für eine Käfighälfte erforderlich ist. Die zusammengefügten Käfigsegmente bzw. Käfighälften sind bevorzugt nämlich identisch.

Der Lageraußenring des Wälzlagers, das mit dem erfindungsgemäßen Käfig versehen ist, kann durch das Pleuel bzw. das Pleuelauge oder durch das Kurbelwellengehäuse selber verwirklicht sein. Es muss sich also beim Lageraußenring keinesfalls um ein separates Bauteil handeln. Die Bohrung im Pleuel bzw. im Kurbelwellengehäuse ist bzw. bildet in diesem Falle die Laufbahn für die Wälzkörper.

Die vorgeschlagene Lagerung kommt insbesondere bei der Kurbelwelle des Verbrennungsmotors zum Einsatz, wobei die Lagerzapfen der Kurbelwelle selber und/oder die Lagerzapfen für die Pleuel entsprechend ausgeführt sein können. Genauso ist es aber auch möglich, die Nockenwelle der Brennkraftmaschine zu lagern. Im letztgenannten Falle können insbesondere die Lagerstellen der Nockenwelle im Zylinderkopf entsprechend ausgeführt sein.

Mit der vorgeschlagenen Lösung wird ein hoher Grad an Stabilität des Käfigs und damit auch der Führung der Wälzkörper an der Lagerstelle erreicht, so dass vorteilhaft eine relativ geringe Lagerreibung erzielt wird.

In vorteilhafter Weise wird weiterhin mit der vorgeschlagenen Lösung eine leichte Montage erreicht. Ferner ist die Geräuschentwicklung im Betrieb gering. Weiterhin liegt mit dem vorgeschlagenen Konzept eine kostengünstige Lösung vor, die mit unterschiedlichen Werkstoffen realisierbar ist.

In den Zeichnungen ist ein Ausführungsbeispiel der Erfindung dargestellt. Es zeigen:
- Fig. 1: in perspektivischer Darstellung einen Käfig einer Kurbelwellenlagerung, wobei zwei Käfigsegmente, die den Käfig bilden, voneinander beabstandet dargestellt sind,

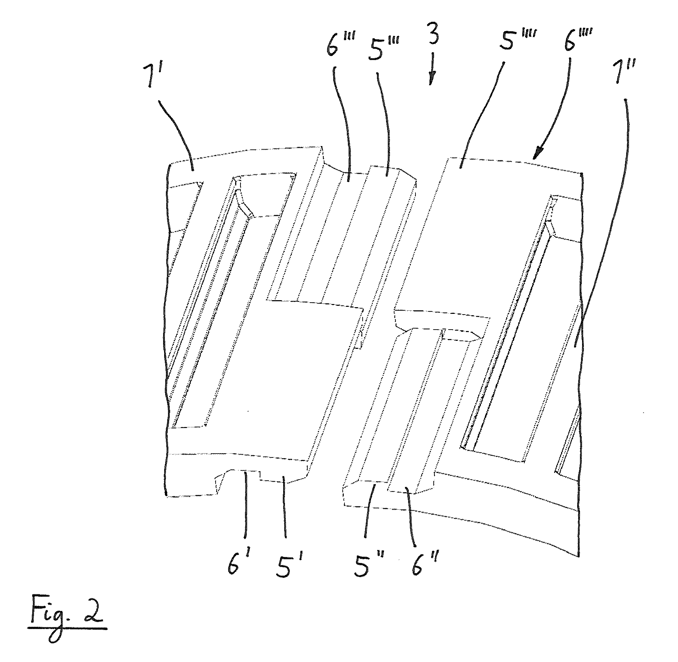

- Fig. 2: einen vergrößerten Abschnitt von Fig. 1, nämlich den oberen Bereich der Stoßstelle zwischen den beiden Käfigsegmenten, und
- Fig. 3: in perspektivischer Darstellung den einen axialen Endbereich eines der Käfigsegmente in weiter vergrößerter Darstellung.

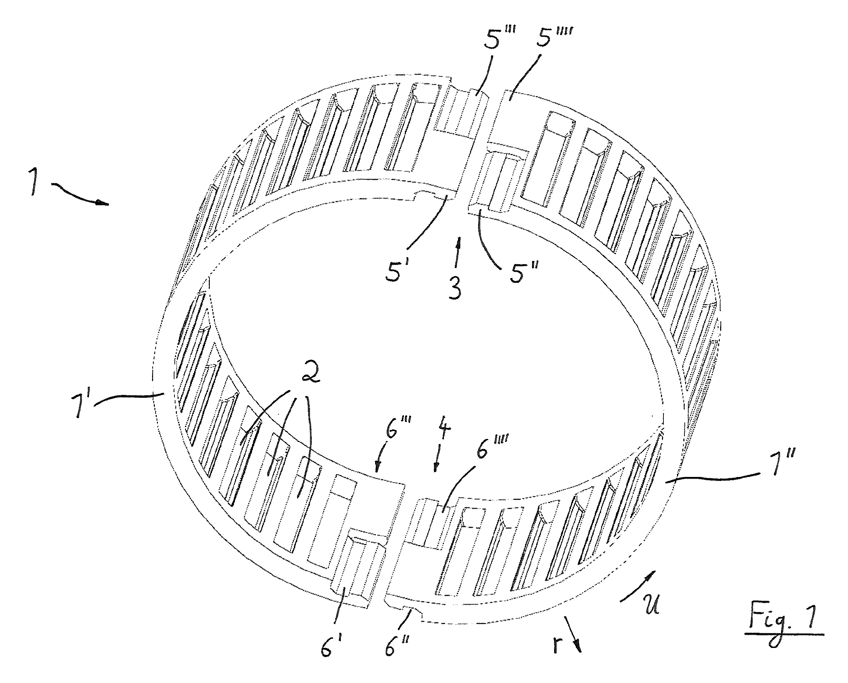

In Fig. 1 ist ein Käfig 1 dargestellt, der aus zwei Käfigsegmenten 1' und 1" besteht, die zusammengefügt den Käfig 1 bilden. Dabei sind die beiden Käfigsegmente 1', 1" identisch ausgeformt, d. h. sie stammen aus demselben Spritzgießwerkzeug.

Der Käfig 1 weist in bekannter Weise Aufnahmetaschen 2 für die (nicht dargestellten) Wälzkörper auf.

Wie zu sehen ist, stoßen die beiden Käfigsegmente 1', 1" an zwei Stoßstellen 3 und 4 zusammen, die in Umfangsrichtung U um 180° versetzt liegen. Die Verbindung an den Stoßstellen 3, 4 erfolgt durch eine formschlüssige Verbindung nach Art einer Clipverbindung 5, 6 wie sie im Detail in den weiteren Figuren dargestellt ist.

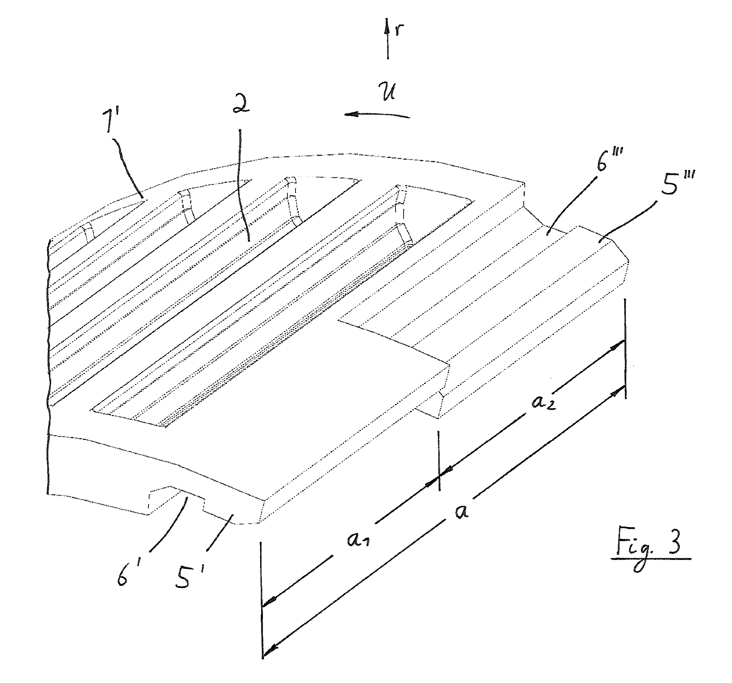

Über die axiale Erstreckung a des Käfigs 1 bzw. der Käfigsegmente 1', 1" (s. Fig. 3) sind die endseitigen Bereiche des Käfigsegments hälftig aufgeteilt, nämlich in einen ersten axialen Bereich a₁ und in einen zweiten axialen Bereich a₂.

In beiden axialen Bereichen a₁ bzw. a₂ sind hakenförmige Vorsprünge 5', 5", 5"' bzw. 5"" angeordnet; diesen benachbart sind jeweils Ausnehmungen 6', 6", 6"' bzw. 6"" angeordnet. Wie sich aus den Figuren ergibt, können die in Umfangsrichtung liegenden Endbereiche der beiden Käfigsegmente 1', 1" aufeinander zu geschoben werden, so dass gleichzeitig
- der hakenförmige Vorsprung 5' in die Ausnehmung 6",
- der hakenförmige Vorsprung 5" in die Ausnehmung 6',
- der hakenförmige Vorsprung 5"' in die Ausnehmung 6"" und
- der hakenförmige Vorsprung 5"" in die Ausnehmung 6"'
einrasten. Somit ergibt sich ein ungestörter, hohlzylindrischer Abschnitt im Bereich der Stoßstellen 3, 4 und eine stabile Verbindung der Käfigsegmente 1', 1". Die Orientierung der Vorsprünge 5 und Ausnehmungen 6 sind dabei in den beiden axialen Bereichen a₁ bzw. a₂ in radialer Richtung r unterschiedlich.

Wie es demgemäß in den Figuren zu erkennen ist, hat jedes Käfigsegment an jedem Umfangsende zwei Einschnappnasen (Vorsprünge). Mittels einfachen Zusammenfügens der beiden Käfigsegmente wird der Käfig auf jede beliebige Welle radial montiert. Der Verschlussmechanismus unterbindet dabei alle Bewegungsmöglichkeiten. Bei der Montage ins Gehäuse bzw. bei der Pleuelmontage wird keine spezielle Vorrichtung zum Zusammenhalten der beiden Käfighälften benötigt.

Die erläuterte Lagerstelle ist zum einen bevorzugt die Lagerung der Kurbelwelle im Gehäuse des Verbrennungsmotors. Genauso kann die Lagerung eingesetzt werden, um ein Pleuel mit seinem Pleuelauge auf einem Zapfen zu lagern, der Bestandteil der Kurbelwelle ist.

### Bezugszeichenliste

- 1: Käfig
- 1': Käfigsegment
- 1": Käfigsegment
- 2: Aufnahmetasche
- 3: Stoßstelle
- 4: Stoßstelle
- 5,6: Clipverbindung
- 5': hakenförmiger Vorsprung
- 5": hakenförmiger Vorsprung
- 5"': hakenförmiger Vorsprung
- 5"": hakenförmiger Vorsprung
- 6': Ausnehmung
- 6": Ausnehmung
- 6"': Ausnehmung
- 6"": Ausnehmung

- a₁: erster axialer Bereich
- a₂: zweiter axialer Bereich
- a: axiale Erstreckung des Käfigs / Käfigsegments
- U: Umfangsrichtung
- r: radiale Richtung

## Patentansprüche

1. Kurbelwellen- oder Pleuellagerung einer Verbrennungskraftmaschine oder eines Kompressors, die zur Lagerung zweier relativ zueinander beweglicher Bauteile eine Reihe Wälzkörper umfasst, die von einem Käfig (1) gehalten werden, wobei der Käfig (1) eine Anzahl Aufnahmetaschen (2) für die Wälzkörper aufweist,
**dadurch gekennzeichnet, dass**
der Käfig (1) aus mindestens zwei Käfigsegmenten (1', 1") besteht, die sich jeweils um einen Umfangsabschnitt des Käfigs (1) erstrecken, wobei die mindestens zwei Käfigsegmente (1', 1") an ihren in Umfangsrichtung liegenden Stoßstellen (3, 4) miteinander formschlüssig verbunden sind.

2. Kurbelwellen- oder Pleuellagerung nach Anspruch 1, **dadurch gekennzeichnet, dass** der Käfig (1) durch genau zwei Käfigsegmente (1", 1") gebildet wird.

3. Kurbelwellen- oder Pleuellagerung nach Anspruch 1 oder 2, **dadurch gekennzeichnet, dass** die formschlüssige Verbindung nach Art einer Clipverbindung (5, 6) ausgebildet ist.

4. Kurbelwellen- oder Pleuellagerung nach einem der Ansprüche 1 bis 3, **dadurch gekennzeichnet, dass** die formschlüssige Verbindung an jeder Stoßstelle (3, 4) durch mindestens einen hakenförmigen Vorsprung (5', 5", 5"', 5"") im einen Käfigsegmente (1', 1") gebildet wird, der in eine kongruente Ausnehmung (6', 6", 6"', 6"") im anderen Käfigsegment (1', 1") eingreift.

5. Kurbelwellen- oder Pleuellagerung nach Anspruch 4, **dadurch gekennzeichnet, dass** an jedem Käfigsegment (1', 1") in Umfangsrichtung folgend jeweils mindestens ein hakenförmiger Vorsprung (5', 5", 5"', 5"") und mindestens eine kongruente Ausnehmung (6', 6", 6"', 6"") vorgesehen sind.

6. Kurbelwellen- oder Pleuellagerung nach Anspruch 4 oder 5, **dadurch gekennzeichnet, dass** in den Endbereichen eines jeden Käfigsegments (1', 1") je zwei hakenförmige Vorsprünge (5', 5", 5"', 5"") vorgesehen sind, die radial gegensinnig angeordnet sind, wobei der eine hakenförmige Vorsprung (5', 5") in einem ersten axialen Bereich (a₁) angeordnet ist und wobei der andere hakenförmige Vorsprung (5"', 5"") in einem zweiten axialen Bereich (a₂) angeordnet ist, der an den ersten axialen Bereich (a₁) angrenzt.

7. Kurbelwellen- oder Pleuellagerung nach Anspruch 6, **dadurch gekennzeichnet, dass** sich die beiden axialen Bereiche (a₁, a₂) jeweils über die Hälfte der axialen Erstreckung (a) des Käfigsegments (1', 1") ausdehnen.

8. Kurbelwellen- oder Pleuellagerung nach einem der Ansprüche 1 bis 7, **dadurch gekennzeichnet, dass** die formschlüssigen Verbindungen an den Stoßstellen (3, 4) im montierten Zustand der Käfigsegmente (1', 1") eine ungestörte hohlzylindrische Form ergeben.

9. Kurbelwellen- oder Pleuellagerung nach einem der Ansprüche 1 bis 8, **dadurch gekennzeichnet, dass** alle Käfigsegmente (1', 1") formgleich ausgebildet sind, wobei die Käfigsegmente (1', 1") vorzugsweise durch einen Spritzgießvorgang hergestellt sind.

10. Kurbelwellen- oder Pleuellagerung nach einem der Ansprüche 1 bis 9, **dadurch gekennzeichnet, dass** die im Käfig (1) platzierten Wälzkörper Zylinderrollen oder Nadeln sind.
